# EUROPEAN PATENT APPLICATION

(11) **EP 4 722 497 A1**
(43) Date of publication of application: **08.04.2026**
(21) Application number: 25205806.0
(22) Date of filing: 30.09.2025
(51) Int. Cl.: F01D 5/10, F01D 5/22, F01D 11/08

(54) **COMPRESSOR BLEED PORT WITH CAVITY INTAKE WIRE**

(30) Priority: 30.09.2024 US 202418901931
(71) Applicant: PRATT & WHITNEY CANADA CORP., Longueuil, Québec J4G 1A1 (CA)
(72) Inventor: CAPRON, Alexandre, (01BE5) Longueuil, J4G 1A1 (CA); YU, Hong, (01BE5) Longueuil, J4G 1A1 (CA)
(74) Representative: Dehns

(57) **Abstract**

A compressor assembly (44) of a gas turbine engine includes: a case (100) surrounding a core; a row of stator blades (112) within the case, wherein the row of stator blades has first shrouds (114); a row of rotor blades (132) within the case and adjacent to the row of stator blades, wherein the row of rotor blades has second shrouds (134). The first shrouds define first mate faces (118) that axially face the second shrouds, and the second shrouds define second mate faces (138) that axially face the first shrouds. A bleed port groove (150) is defined between the first mate faces and the second mate faces. A bleed port (155) is defined along the bleed port groove, a bleed cavity (160) is defined in the case. The bleed cavity is exterior to the first shrouds and the second shrouds, and fluidly coupled to the core via the bleed port. A circumferentially extending first wire (170) is secured within the bleed port groove.

## Description

### BACKGROUND

Exemplary embodiments of the present invention pertain to the art of compressors and more specifically to a compressor bleed port with a cavity intake wire.

In gas turbine engines, compressors may have bleed ports located on shrouds between stators and rotors, through which a portion of core flow is diverted toward a bleed cavity. The diverted flow typically will not flow uniformly and may induce vortex shedding, which causes pressure fluctuations in the bleed cavity. The fluctuations may induce a vibrational frequency that is influenced by a shape of the bleed ports. These frequencies may occur at the natural frequencies of the rotor or stator blades, increasing the dynamic stress in the compressor.

### BRIEF DESCRIPTION

An aspect of the invention provides a compressor assembly of a gas turbine engine, the compressor assembly including: a case surrounding a core; a row of stator blades within the case, wherein the row of stator blades has first shrouds; a row of rotor blades within the case and adjacent to the row of stator blades, wherein the row of rotor blades has second shrouds, wherein the first shrouds define first faces (i.e., first mate faces) that axially face the second shrouds, and the second shrouds define second faces (i.e., second mate faces) that axially face the first shrouds; a bleed port groove defined between the first faces and the second faces; a bleed port defined along the bleed port groove; a bleed cavity defined in the case, exterior to the first shrouds and the second shrouds, fluidly coupled to the core via the bleed port; and a circumferentially extending first wire (e.g., a first ring or first portion of a ring) secured within the bleed port groove.

In any of the aspects or embodiments described above or herein, the row of stator blades may be forward (or upstream) of the row of rotor blades (relative to airflow through the core).

In any of the aspects or embodiments described above or herein, the compressor assembly may be a low pressure compressor.

In any of the aspects or embodiments described above or herein, the bleed port groove may be annular. In any of the aspects or embodiments described above or herein, the first wire may be configured as an annular ring.

In any of the aspects or embodiments described above or herein: the first shrouds may have first outer surfaces and first inner surfaces. In any of the aspects or embodiments described above or herein, the first wire may be connected to (e.g. disposed or fixed on, adjacent, against, in contact with or attached to) a or the first face(s), near the first inner surfaces.

In any of the aspects or embodiments described above or herein: the first shrouds may have first outer surfaces and first inner surfaces. In any of the aspects or embodiments described above or herein, the first wire may be connected to (e.g. disposed or fixed on, adjacent, against, in contact with or attached to) a or the first face(s), intermediate the first inner surfaces and the first outer surfaces (between the first inner surfaces and the first outer surfaces, e.g., proximate a middle of the first shroud between the first inner surfaces and the first outer surfaces).

In any of the aspects or embodiments described above or herein: the second shrouds may have second outer surfaces and second inner surfaces. In any of the aspects or embodiments described above or herein, the first wire may be connected to (e.g. disposed or fixed on, adjacent, against, in contact with or attached to) the second faces, near the second outer surfaces.

In any of the aspects or embodiments described above or herein: the first shrouds may have first outer surfaces and first inner surfaces; the second shrouds may have second outer surfaces and second inner surfaces; the first wire may be connected to (e.g. disposed or fixed on, adjacent, against, in contact with or attached to) the first faces, near the first inner surfaces; and/or the assembly may include a circumferentially extending second wire (e.g., a second ring or second portion of a ring), connected to (e.g. disposed or fixed on, adjacent, against, in contact with or attached to) the second faces, near the second outer surfaces, wherein the first and second wires are configured the same as each other.

In any of the aspects or embodiments described above or herein: the first shrouds may have first outer surfaces and first inner surfaces; the second shrouds may have second outer surfaces and second inner surfaces; the first wire may be connected to (e.g. disposed or fixed on, adjacent, against, in contact with or attached to) the first faces, near the first outer surfaces; and/or the assembly may include a circumferentially extending second wire, connected to (e.g. disposed or fixed on, adjacent, ag against, in contact with or attached to) the second faces, near the second inner surfaces, wherein the first and second wires are configured the same as each other.

Another aspect of the invention provides a gas turbine engine, including: a compressor assembly, including: a case surrounding a core; a row of stator blades within the case, wherein the row of stator blades has first shrouds; a row of rotor blades within the case and adjacent to the row of stator blades, wherein the row of rotor blades has second shrouds, wherein the first shrouds define first faces (i.e., first mate faces) that axially face the second shrouds, and the second shrouds define second faces (i.e., second mate faces) that axially face the first shrouds; a bleed port groove defined between the first faces and the second faces; a bleed port defined along the bleed port groove; a bleed cavity defined in the case, exterior to the first shrouds and the second shrouds, and fluidly coupled to the core via the bleed port; and a circumferentially extending first wire secured within the bleed port groove.

In any of the aspects or embodiments described above or herein, the row of stator blades may be forward (or upstream) of the row of rotor blades (relative to airflow through the core).

In any of the aspects or embodiments described above or herein, the compressor assembly may be a low pressure compressor.

In any of the aspects or embodiments described above or herein, the bleed port groove may be annular. In any of the aspects or embodiments described above or herein, the first wire may be configured as an annular ring.

In any of the aspects or embodiments described above or herein: the first shrouds may have first outer surfaces and first inner surfaces. In any of the aspects or embodiments described above or herein, the first wire may be connected to (e.g. disposed or fixed on, adjacent, against, in contact with or attached to) a or the first face(s), near the first inner surfaces.

In any of the aspects or embodiments described above or herein: the first shrouds may have first outer surfaces and first inner surfaces. In any of the aspects or embodiments described above or herein, the first wire may be connected to (e.g. disposed or fixed on, adjacent, against, in contact with or attached to) a or the first face(s), intermediate the first inner surfaces and the first outer surfaces (between the first inner surfaces and the first outer surfaces, e.g., proximate a middle of the first shroud between the first inner surfaces and the first outer surfaces).

In any of the aspects or embodiments described above or herein: the second shrouds may have second outer surfaces and second inner surfaces. In any of the aspects or embodiments described above or herein, the first wire may be connected to (e.g. disposed or fixed on, adjacent, against, in contact with or attached to) a or the second face(s), near the second outer surfaces.

In any of the aspects or embodiments described above or herein: the first shrouds may have first outer surfaces and first inner surfaces; the second shrouds may have second outer surfaces and second inner surfaces; the first wire may be connected to (e.g. disposed or fixed on, adjacent, against, in contact with or attached to) the first faces, near the first inner surfaces; and/or the assembly may include a circumferentially second extending wire, connected to (e.g. disposed or fixed on, adjacent, against, in contact with or attached to) the second faces, near the second outer surfaces, wherein the first and second wires are configured the same as each other.

In any of the aspects or embodiments described above or herein: the first shrouds may have first outer surfaces and first inner surfaces; the second shrouds may have second outer surfaces and second inner surfaces; the first wire may be connected to (e.g. disposed or fixed on, adjacent, against, in contact with or attached to) the first faces, near the first outer surfaces; and/or the assembly may include a circumferentially second extending wire, connected to (e.g. disposed or fixed on, adjacent, against, in contact with or attached to) the second faces, near the second inner surfaces, wherein the first and second wires are configured the same as each other.

Another aspect of the invention provides a method of controlling flow in a gas turbine engine, the method including: directing a core flow through a compressor (e.g., a compressor assembly according any of the aspects or embodiments described above or herein), past a row of stator blades having first shrouds and toward a row of rotor blades having second shrouds; and diverting a portion of the flow towards a bleed cavity via a bleed port, of a bleed port groove, defined between the first shrouds and the second shrouds, over one or more circumferentially extending wires (e.g., one or more rings or portions or rings) in the bleed port groove.

In any of the aspects or embodiments described above or herein, diverting the portion of the flow towards the bleed cavity the over one or more wires in the bleed port groove may include one or more of: diverting the flow over a first wire connected to (e.g. disposed or fixed on, adjacent, against, in contact with or attached to) first faces (i.e., first mate faces) of the first shrouds that face the second shrouds, near first inner surfaces of the first shrouds; diverting the flow over the first wire connected to the first faces of the first shrouds, intermediate the first inner surfaces and first outer surfaces of the first shrouds (between the first inner surfaces and the first outer surfaces, e.g., proximate a middle of the first shroud between the first inner surfaces and the first outer surfaces); diverting the flow over the first wire connected to second faces (i.e. second mate faces) of the second shrouds that face the first shrouds, near second outer surfaces of the second shrouds; diverting the flow over the first wire connected to the first faces of the first shrouds, near the first inner surfaces, and over a second wire connected to (e.g. disposed or fixed on, adjacent, against, in contact with or attached to) the second faces, near the second outer surfaces of the second shrouds; and diverting the flow over the first wire connected to the first faces of the first shrouds, near the first outer surfaces, and over the second wire connected to the second faces, near second inner surfaces of the second shrouds.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 shows a compressor of the gas turbine engine, having bleed ports defined between stator shrouds and rotor shrouds, according to an embodiment;
FIG. 3 shows a cross section of the compressor of the gas turbine engine, along line 3-3 of FIG. 2, showing a portion of first wire extending along one of the bleed ports, according to an embodiment;
FIG. 4 shows the first wire extending along a mate face of a stator shroud, near an inner surface of the stator shroud, according to an embodiment;
FIG. 5 shows the first wire extending along the mate face of the stator shroud, between an outer surface and an inner surface of the stator shroud, according to an embodiment;
FIG. 6 shows the first wire extending along the mate face of a rotor shroud, near an outer surface of the rotor shroud, according to an embodiment;
FIG. 7 shows the first wire extending along the mate face of the stator shroud, near the inner surface of the stator shroud, and a second wire long the mate face of the rotor shroud, near the outer surface of the rotor shroud, according to an embodiment;
FIG. 8 shows the first wire extending along the mate face of the stator shroud, near the outer surface of the stator shroud, and a second wore long the mate face of the rotor shroud, near an inner surface of the rotor shroud, according to an embodiment; and
FIG. 9 is a flowchart showing a method of controlling flow in the gas turbine engine, according to an embodiment.

### DETAILED DESCRIPTION

A detailed description of one or more embodiments of the disclosed apparatus and method are presented herein by way of exemplification and not limitation with reference to the Figures.

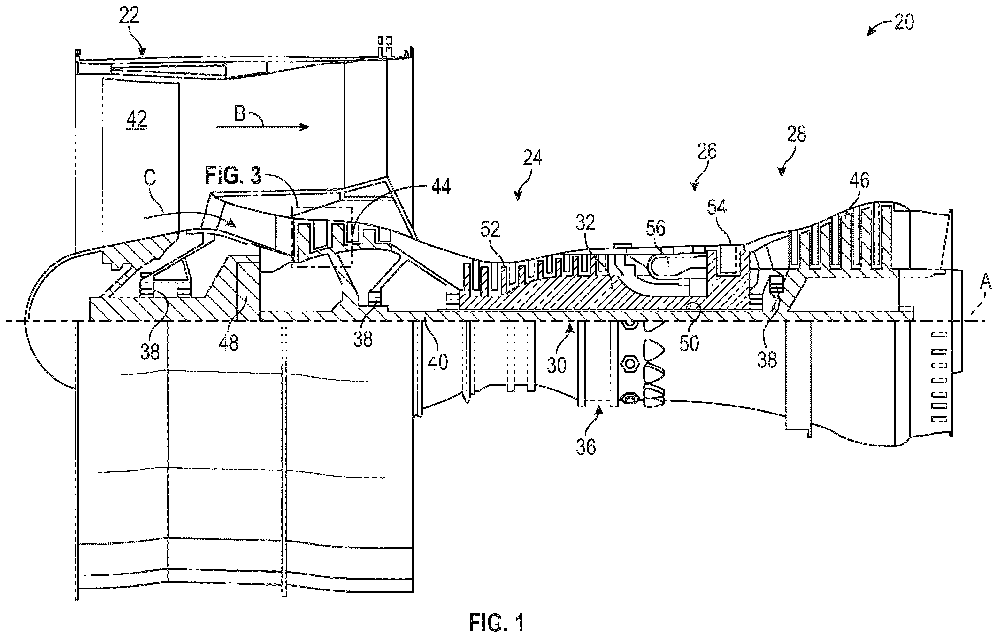

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]0.5. The "Low corrected fan tip speed" as disclosed herein according to one non-limiting embodiment is less than about 1,150 ft/second (350.5 m/sec).

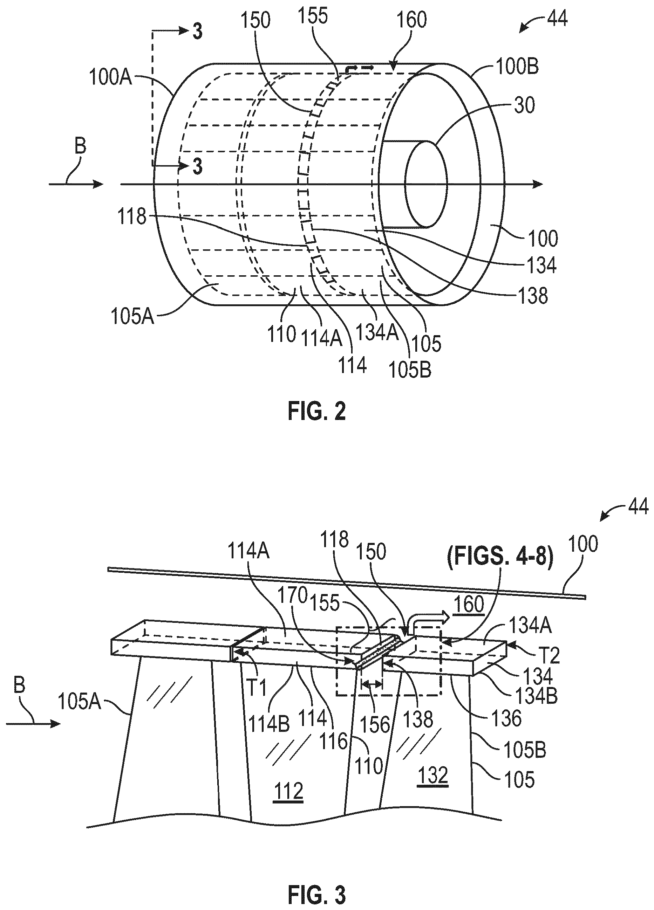

Turning to FIGS. 2 and 3, the low pressure compressor 44 is illustrated. Though an axial compressor is illustrated, it is noted that the disclosed embodiments are applicable to axial and centrifugal compressor stages. The compressor 44 has a case 100. The case 100 extends from a forward end 100A to an aft end 100B. The case 100 surrounds a multitude of rotor rows 105 and stator rows 110 following each other. The figure shows a forward rotor row 105A, an aft rotor row 105B and a stator row 110 between the rotor rows 105. Typically for each rotor row 105 there is one stator row 110. Some configurations include dual stator rows 110 between rotor rows 105. Some configurations include a stator row 110 in front of the forward rotor row 140. The rotor rows 105 are driven by the low speed spool 30, shown schematically in FIG. 2. The stator row 110 has stator blades 112 (FIG. 3) and stator blade shrouds (or first shrouds) 114 at radial outer tips 116 of the stator blades 112. Reference herein shall be to the aft rotor row 105B, which for simplicity will be referred to as the rotor row 105. The rotor row 105 includes rotor blades 132 (FIG. 3) and rotor blade shrouds (or second shrouds) 134 at radial outer tips 136 of the rotor blades 132. The first shrouds 114 and the second shrouds 134 may be axially interconnected, e.g., with a slip fit, with typical geometric features, for example defining labyrinth seals, to prevent unintended leakage of gas path flow B.

The first shrouds 114 each have ones of first outer surfaces 114A and ones of first inner surfaces 114B separated by a first shroud thickness T1. The second shrouds 134 each have ones of second outer surfaces 134A and ones of second inner surfaces 134B separated by a second shroud thickness T2, which may be the same as the first shroud thickness T1. The first shrouds 114 each have ones of first mate faces 118 that face the second shrouds 134, such that the first mate faces 118 are aft facing. The second shrouds 134 each have ones of second mate faces 138 that face the first shrouds 114, such that the second mate faces 138 are forward facing.

A bleed port groove 150 is defined axially between the first mate faces 118 and the second mate faces 138. The bleed port groove 150 may have an annular shape. Bleed ports (or slots) 155, circumferentially spaced apart from each other, may be defined along the bleed port groove 150. The bleed ports 155 will have a defined width 156, or axial span. A bleed cavity 160 is defined within the case 100, radially exterior to the first shrouds 114 and the second shrouds 134. The bleed cavity 160 is fluidly coupled to the gas path B via the bleed ports 155.

The disclosed embodiments position the bleed slot 155 between the stator 110 and rotor 105. However, it is to be appreciated that the groove 150 and bleed slot 155 may be positioned between two stators 110, or a rotor 105 and a strut, or in the middle of a rotor 105. Bleed slots 155 may be located on the shroud, in the middle of a centrifugal impeller shroud. With the axial rotor configuration shown in the figures, this last-mentioned configuration of the location of the slots 155 would be less optimal as the rotor 105 has shorter chords. For the axial rotor configuration, the bleed slots 155 are typically located upstream or downstream of the rotor 105.

As shown in FIG. 3, according to the embodiments, a circumferentially extending first wire 170 is disposed in the bleed port 155, against one or both of the first mate faces 118 and the second mate faces 138. In one embodiment the first wire 170 extends circumferentially around the entire bleed port groove 150 and forms an annular ring. Only a portion of the first wire 170 is shown in FIG. 3, e.g., which extends along one of the bleed ports 155.

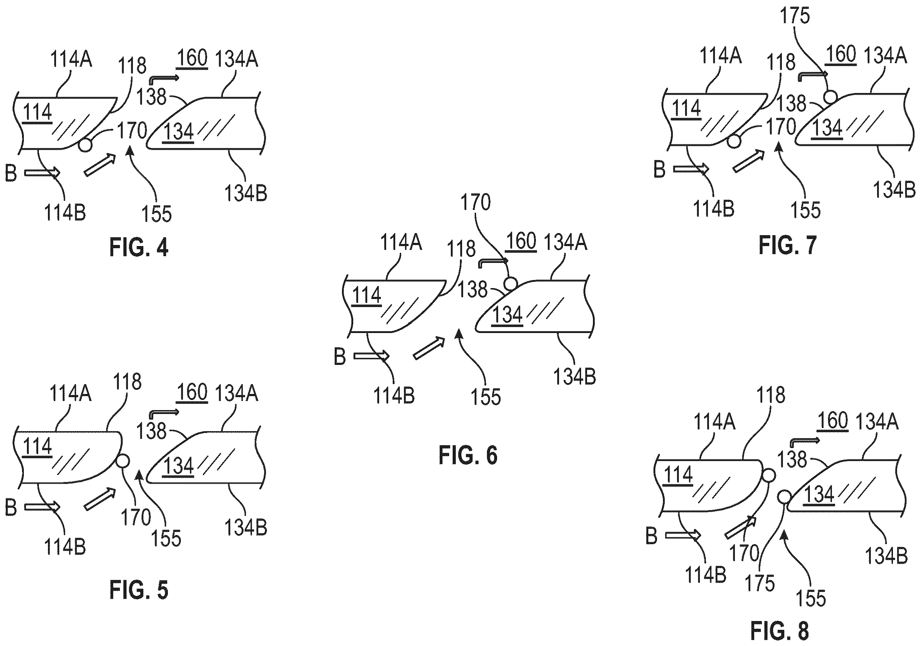

The utilization of the first wire 170 induces controlled vortex shedding that generates vibrational frequences that avoid the natural frequency of the blades. The vibrational frequencies may be controlled based on placement and diameter of the first wire 170. A diameter of the wire should be between two percent (2%) and fifty percent (50%) of the width 156 of the bleed port 155. For example, instead of having a higher vibrational pressure amplitude at a low frequency (e.g., below 5,000Hz), the embodiment may dampen low frequency vibrations and maintain peak amplitudes at higher frequencies that avoid the natural frequencies of the blades. Dynamic stress for the critical frequencies can therefore be minimized. Several different configuration options of the utilization of the first wire 170, and a second wire 175, which also may be utilized to control the vibrational frequences induced by the flow through the bleed port 155, are shown in FIGS. 4-8, discussed in greater detail below. These configurations are not intended to limit the scope of the disclosure with regard to placement of the wires or a number of utilized wires.

Turning to FIG. 4, the figure shows one of the first shrouds 114, including the first outer surface 114A, the first inner surface 114B and the first mate face 118. The figure also shows one of the second shrouds 134, including the second outer surface 134A, the second inner surface 134B and the second mate face 138. The figure also shows a portion of the gas path B diverted to the bleed cavity 160 via the bleed port 155. The first wire 170 is disposed on the first mate face 118, near the first inner surface 114B.

Turning to FIG. 5, the figure shows one of the first shrouds 114, including the first outer surface 114A, the first inner surface 114B and the first mate face 118. The figure also shows one of the second shrouds 134, including the second outer surface 134A, the second inner surface 134B and the second mate face 138. The figure also shows a portion of the gas path B diverted to the bleed cavity 160 via the bleed port 155. The first wire 170 is disposed on the first mate face 118, intermediate the first inner surface 114B and the first outer surface 114A.

Turning to FIG. 6, the figure shows one of the first shrouds 114, including the first outer surface 114A, the first inner surface 114B and the first mate face 118. The figure also shows one of the second shrouds 134, including the second outer surface 134A, the second inner surface 134B and the second mate face 138. The figure also shows a portion of the gas path B diverted to the bleed cavity 160 via the bleed port 155. The first wire 170 is disposed on the second mate face 138, near the second outer surface 134A.

Turning to FIG. 7, the figure shows one of the first shrouds 114, including the first outer surface 114A, the first inner surface 114B and the first mate face 118. The figure also shows one of the second shrouds 134, including the second outer surface 134A, the second inner surface 134B and the second mate face 138. The figure also shows a portion of the gas path B diverted to the bleed cavity 160 via the bleed port 155. The first wire 170 is disposed on the first mate face 118, near the first inner surface 114B. A circumferential extending second wire 175, having a same configuration as the first wire 170, is disposed on the second mate face 138, near the second outer surface 114A.

Turning to FIG. 8, the figure shows one of the first shrouds 114, including the first outer surface 114A, the first inner surface 114B and the first mate face 118. The figure also shows one of the second shrouds 134, including the second outer surface 134A, the second inner surface 134B and the second mate face 138. The figure also shows a portion of the gas path B diverted to the bleed cavity 160 via the bleed port 155. The first wire 170 is disposed on the first mate face 118, near the first outer surface 114A. The second wire 175, having a same configuration as the first wire 170, is disposed on the second mate face 138, near the second inner surface 134B.

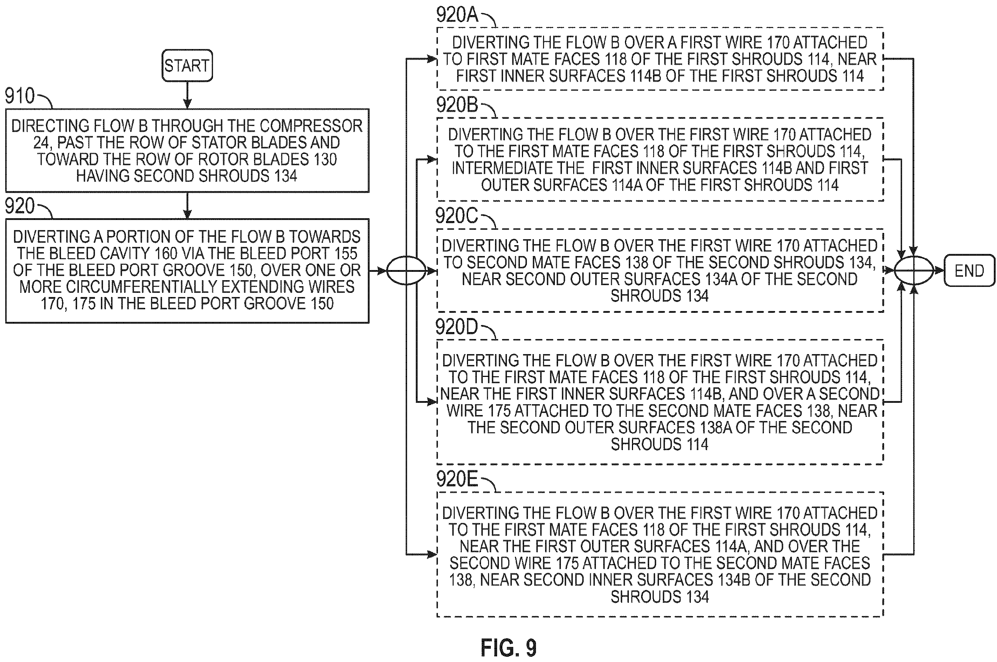

Turning to FIG. 9, a flowchart shows a method of controlling flow in the gas turbine engine 20. Boxes in dashed lines in the flowchart represent further explanations of one or more preceding steps and are not intended to limit the scope of the embodiments. As shown in block 910, the method includes directing flow B through the compressor 24 (or compressor assembly), e.g., the low pressure compressor 44, past the stator row 110 having first shrouds 114 and toward the rotor row 105 having second shrouds 134.

As shown in block 920, the method includes diverting a portion of the flow B towards the bleed cavity 160 via the bleed port 155 of the bleed port groove 150, defined between the first shrouds 114 and the second shrouds 134. The flow B moves over one or more circumferentially extending wires 170, 175 in the bleed port groove 150.

As shown in block 920A, diverting the portion of the flow B towards the bleed cavity 160 the over one or more wires 170, 175 in the bleed port groove 150 (block 920) includes diverting the flow B over a first wire 170 attached to first mate faces 118 of the first shrouds 114 that face the second shroud 134. The first wire 170 is near the first inner surfaces 114B of the first shrouds 114.

As shown in block 920B, diverting the portion of the flow B towards the bleed cavity 160 the over one or more wires 170, 175 in the bleed port groove 150 (block 920) includes diverting the flow B over the first wire 170 attached to the first mate faces 118 of the first shrouds 114. The first wire 170 is located intermediate the first inner surfaces 114B and first outer surfaces 114A of the first shrouds 114.

As shown in block 920C, diverting the portion of the flow B towards the bleed cavity 160 the over one or more wires 170, 175 in the bleed port groove 150 (block 920) includes diverting the flow B over the first wire 170 attached to second mate faces 138 of the second shrouds 134 that face the first shrouds 114. The first wire is near the second outer surfaces 134A of the second shrouds 134.

As shown in block 920D, diverting the portion of the flow B towards the bleed cavity 160 the over one or more wires 170, 175 in the bleed port groove 150 (block 920) includes diverting the flow B over the first wire 170 attached to the first mate faces 118 of the first shrouds 114, and over a second wire 175 attached to the second mate faces 138. The first wire is near the first inner surfaces 114B and the second wire 175 is near the second outer surfaces 134A of the second shrouds 134.

As shown in block 920E, diverting the portion of the flow B towards the bleed cavity 160 the over one or more wires 170, 175 in the bleed port groove 150 (block 920) includes diverting the flow B over the first wire 170 attached to the first mate faces 118 of the first shrouds 114, and over the second wire 175 attached to the second mate faces 138. The first wire 170 is near the first outer surfaces 114A and the second wire 175 is near second inner surfaces 134B of the second shrouds 134.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A compressor assembly (44) of a gas turbine engine (20), the compressor assembly (44) comprising:
a case (100) surrounding a core;
a row of stator blades (112) within the case (100), wherein the row of stator blades (112) has first shrouds (114);
a row of rotor blades (132) within the case (100) and adjacent to the row of stator blades (112), wherein the row of rotor blades (132) has second shrouds (134), wherein the first shrouds (114) define first mate faces (118) that axially face the second shrouds (134), and the second shrouds (134) define second mate faces (138) that axially face the first shrouds (114);
a bleed port groove (150) defined between the first mate faces (118) and the second mate faces (138);
a bleed port (155) defined along the bleed port groove (150);
a bleed cavity (160) defined in the case (100), wherein the bleed cavity (160) is exterior to the first shrouds (114) and the second shrouds (134), and fluidly coupled to the core via the bleed port (155); and
a circumferentially extending first wire (170) secured within the bleed port groove (150).

2. The assembly of claim 1, wherein the row of stator blades (112) is forward of the row of rotor blades (132).

3. The assembly of claim 1 or 2, wherein the compressor assembly (44) is a low pressure compressor (44).

4. The assembly of claim 1, 2 or 3, wherein the bleed port groove (150) is annular, and the first wire (170) is configured as an annular ring.

5. The assembly of any preceding claim, wherein the first shrouds (114) have first outer surfaces (114A) and first inner surfaces (114B), and the first wire (170) is connected to first mate face (118), near the first inner surfaces (114B).

6. The assembly of any of claims 1 to 4, wherein the first shrouds (114) have first outer surfaces (114A) and first inner surfaces (114B), and the first wire (170) is connected to first mate face (118), intermediate the first inner surfaces (114B) and the first outer surfaces (114A).

7. The assembly of any of claims 1 to 4, wherein the second shrouds (134) have second outer surfaces (134A) and second inner surfaces (134B), and the first wire (170) is connected to the second mate faces (138), near the second outer surfaces (134A).

8. The assembly of any of claims 1 to 4, wherein:
the first shrouds (114) have first outer surfaces (114A) and first inner surfaces (114B);
the second shrouds (134) have second outer surfaces (134A) and second inner surfaces (134B);
the first wire (170) is connected to the first mate faces (118), near the first inner surfaces (114B); and
the assembly includes a circumferentially extending second wire (175), connected to the second mate faces (138), near the second outer surfaces (134A), wherein the first and second wires (170, 175) are, optionally, configured the same as each other.

9. The assembly of claim 4, wherein:
the first shrouds (114) have first outer surfaces (114A) and first inner surfaces (114B);
the second shrouds (134) have second outer surfaces (134A) and second inner surfaces (134B);
the first wire (170) is connected to the first mate faces (118), near the first outer surfaces (114A); and
the assembly includes a circumferentially extending second wire (175), connected to the second mate faces (138), near the second inner surfaces (134B), wherein the first and second wires (170, 175) are, optionally, configured the same as each other.

10. A gas turbine engine (20) comprising a compressor assembly (44) according to any preceding claim.

11. A method of controlling flow in a gas turbine engine (20), the method comprising:
directing a core flow through a compressor (44; 24), past a row of stator blades (112) having first shrouds (114) and toward a row of rotor blades (132) having second shrouds (134); and
diverting a portion of the flow towards a bleed cavity (160) via a bleed port (155), of a bleed port groove (150), defined between the first shrouds (114) and the second shrouds (134), over one or more circumferentially extending wires (170) in the bleed port groove (150).

12. The method of claim 11, wherein diverting the portion of the flow towards the bleed cavity (160) the over one or more wires (170) in the bleed port groove (150) includes diverting the flow over a first wire (170) attached to first mate faces (118) of the first shrouds (114) that face the second shrouds (134).

13. The method of claim 12, wherein:
the first wire (170) is attached to first mate faces (118) near first inner surfaces (114B) of the first shrouds (114);
the first wire (170) is attached to first mate faces (118) intermediate the first inner surfaces (114B) and first outer surfaces (114A) of the first shrouds (114); or
the first wire (170) is attached to first mate faces (118) near second outer surfaces (134A) of the second shrouds (134).

14. The method of claim 11, wherein diverting the portion of the flow towards the bleed cavity (160) the over one or more wires (170) in the bleed port groove (150) includes diverting the flow over a first wire (170) attached to the first mate faces (118) of the first shrouds (114) and over a second wire (175) attached to the second mate faces (138).

15. The method of claim 14, wherein:
the first wire (170) is attached to first mate faces (118) near first inner surfaces (114B) of the first shrouds (114), and the second wire (175) is attached to the second mate faces (138) near the second outer surfaces (134A) of the second shrouds (134); or
the first wire (170) is attached to first mate faces (118) near the first outer surfaces (114A) of the first shrouds (114), and the second wire (175) is attached to the second mate faces (138) near second inner surfaces (134B) of the second shrouds (134).
